# FASCICULE DE BREVET EUROPEEN

(11) **EP 0 913 684 B1**
(45) Date de publication et mention de la délivrance du brevet: **01.04.2009**
(21) Numéro de dépôt: 98402688.0
(22) Date de dépôt: 28.10.1998
(51) Int. Cl.: G01N 27/06

(54) **Procédé de détection d'une anomalie de fonctionnement d'une machine à laver du matériel médical ou analogue et dispositif correspondant**
Verfahren zur Feststellung einer Betriebsunregelmässigkeit von einem Waschautomat für medizinisches oder ähnliches Material und entsprechende Vorrichtung
Method for detecting an anomaly in the working of a washing machine for medical or analogous material and corresponding apparatus

(30) Priorité: 29.10.1997 FR 9713581; 16.03.1998 FR 9803283; 16.03.1998 FR 9803284
(43) Date de publication de la demande: 06.05.1999
(73) Titulaire: Franklab, 78180 Montigny le Bretonneux (FR)
(72) Inventeur: El. Rassi, Wissam, 78180 Montigny Le Bretonneux (FR)
(74) Mandataire: Leszczynski, André

(56) Documents cités:
- EP-A- 0 763 728
- WO-A-92/22808
- DE-A- 3 400 263
- GB-A- 2 276 459
- US-A- 4 687 997
- US-A- 4 756 321
- US-A- 4 964 185

## Description

La présente invention concerne un procédé de détection d'une anomalie de fonctionnement d'une machine à laver du matériel médical ou analogue et un ensemble pour la mise en oeuvre du procédé.

Il est connu d'utiliser pour nettoyer et désinfecter du matériel médical, par exemple des endoscopes, des machines à laver comportant une cuve dans laquelle le matériel à laver subit des étapes successives de traitement par des agents de nettoyage, de désinfection et de neutralisation, ces agents de traitement étant prélevés par la machine dans des bidons de stockage à l'état concentré et dilués avec de l'eau dans la cuve au moment de l'utilisation.

Pour garantir un nettoyage et une désinfection efficaces du matériel, sans risque de contamination croisée, d'une part la présence dans la cuve des agents de nettoyage et de désinfection à la concentration requise doit être effective et d'autre part l'ordre d'intervention des différents agents de traitement doit être scrupuleusement respecté.

On connaît par la demande internationale WO 92/22808 un dispositif destiné à vérifier que la concentration d'un agent de stérilisation utilisé dans une machine à laver du matériel médical est bien correcte.

Ce dispositif comporte un capteur de conductivité placé dans un conduit reliant un réservoir de stockage de l'agent de stérilisation à l'état concentré à une chambre de dilution, dans laquelle de l'eau purifiée est introduite avec la quantité nécessaire pour obtenir la concentration souhaitée.

Ce dispositif ne permet pas d'exclure une défaillance de la machine à laver ou une erreur humaine si d'autres agents de traitement sont utilisés en plus de l'agent de stérilisation.

Il existe donc un besoin pour réduire encore le risque de contamination croisée et avertir d'une erreur humaine ou d'une défaillance de la machine à laver lorsque plusieurs agents de traitement sont utilisés.

L'invention a ainsi pour objet un nouveau procédé de détection d'une anomalie de fonctionnement d'une machine à laver du matériel médical ou analogue, le fonctionnement de la machine à laver faisant intervenir au moins deux étapes de traitement dudit matériel par des agents de traitement dans une cuve de la machine à laver, telles que des étapes successives de traitement par des agents de nettoyage, de désinfection ou de neutralisation, ces agents de traitement étant prélevés à l'état concentré par la machine à laver et dilués avec de l'eau en vue de l'utilisation dans ladite cuve, ce procédé étant caractérisé par le fait :
- qu'il comprend les étapes consistant à :
   a) effectuer des mesures de résistivité au moyen d'un ou plusieurs capteurs situés en un ou plusieurs emplacements prédéterminés de la machine à laver et à des moments prédéterminés du fonctionnement de celle-ci,
   b) comparer le résultat de la mesure effectuée au moyen d'un capteur donné à un moment donné avec une plage de valeurs prédéterminée représentative de la présence au niveau dudit capteur d'un agent de traitement préconisé prédéterminé, choisi parmi plusieurs et correspondant à l'agent de traitement devant normalement être présent au moment de la mesure en cas de fonctionnement correct de la machine à laver,
   c) déceler à partir de cette comparaison une éventuelle anomalie de fonctionnement de la machine à laver,
- et par le fait que les agents de traitement préconisés sont choisis de manière à ce qu'ils présentent des résistivités suffisamment différentes pour permettre leur différentiation lors desdites mesures de résistivité, l'écart de résistivité entre les différents agents de traitement préconisés étant au besoin augmenté par apport d'additifs conducteurs.

Dans une mise en oeuvre particulière de l'invention, préalablement à l'envoi des agents de traitement dans la cuve, on détermine les plages de valeurs précitées en fonction du résultat d'une mesure de résistivité de l'eau utilisée pour diluer les agents de traitement, de manière à tenir compte de l'influence du degré hydrotimétrique de l'eau sur les mesures ultérieures de la résistivité du liquide présent dans la cuve à chaque étape de traitement.

On peut ainsi vérifier la présence effective à la concentration requise de chaque agent de traitement dans la cuve de la machine à laver et avertir d'une défaillance due par exemple au sectionnement d'un conduit par lequel un agent de traitement est acheminé dans la cuve ou à l'interversion de deux produits.

Cette vérification s'effectue d'une manière fiable, quelle que soit l'origine de l'eau utilisée pour diluer les agents de traitement dans la cuve et son degré hydrotimétrique.

L'installation d'une machine à laver ou le remplacement d'une machine existante peut donc s'effectuer sans que l'installateur ait à se préoccuper de l'influence de la dureté de l'eau, celle-ci étant susceptible de varier dans une large mesure en fonction de son origine géographique et des traitements éventuels effectués en aval de son point de puisage.

Dans une mise en oeuvre particulière de l'invention, on effectue un calibrage en présence de l'eau utilisée pour la dilution, puis on mesure la variation de résistivité induite par la présence d'un agent de traitement dans le liquide contenu dans la cuve, et l'on compare le résultat de cette mesure avec une plage de valeurs prédéterminée dépendant de paramètres ajustés lors du calibrage.

De préférence, on utilise un capteur de résistivité agencé de manière à constituer l'une des branches d'un pont de Wheastone, ce pont de Wheastone comportant dans ses autres branches au moins deux résistances dont la valeur peut être ajustée en fixant des paramètres d'équilibrage, on ajuste la valeur de ces paramètres de manière à obtenir l'équilibre du pont de Wheastone lorsque le liquide présent dans la cuve est l'eau utilisée pour la dilution des agents de traitement, et l'on compare en présence d'un agent de traitement l'amplitude du courant de déséquilibre avec des plages de valeurs prédéterminées dépendant desdits paramètres d'équilibrage.

Toujours dans une mise en oeuvre particulière de l'invention, les agents de traitement sont contenus à l'état concentré dans des bidons de stockage et prélevés par la machine au moyen de cannes de prélèvement introduites dans ces bidons.

Ces cannes sont alors avantageusement munies chacune d'au moins un capteur de résistivité.

On peut ainsi identifier chacun des produits présents dans les bidons de stockage et vérifier que ces derniers n'ont pas été intervertis ou détecter qu'un agent de traitement non préconisé est utilisé.

Les cannes de prélèvement sont en outre avantageusement munies d'une pluralité d'électrodes agencées de manière à mesurer le niveau du liquide dans les bidons de stockage.

Dans une réalisation particulière, les électrodes étant réparties verticalement et successivement alimentées en courant, en cas d'absence de passage de courant dans le liquide pour une électrode située à une hauteur donnée, on vérifie également l'absence de passage de courant dans le liquide à partir de l'électrode immédiatement supérieure avant de valider le résultat de la mesure de niveau.

Avantageusement, on détermine à partir du résultat des mesures de niveau une éventuelle anomalie de consommation des agents de traitement et l'on avertit un site éloigné en cas de baisse du niveau en deçà d'une valeur de consigne.

L'invention a encore pour objet un ensemble pour la mise en oeuvre du procédé.

Dans une mise en oeuvre particulière de l'invention, l'un au moins desdits agents de traitement comporte un additif conducteur inerte vis-à-vis du traitement considéré, tel que du chlorure de potassium, à une concentration de 0,1% par exemple.

Dans un exemple particulier de mise en oeuvre de l'invention, les agents de traitement présentent à l'état concentré des résistivités appartenant à l'intervalle 7 - 1100 Ohms.

D'autres caractéristiques et avantages de l'invention apparaîtront à la lecture de la description détaillée qui va suivre, d'exemples de mise en oeuvre non limitatifs de l'invention, et à l'examen du dessin annexé sur lequel :
- la figure 1 est une vue schématique d'une machine à laver équipée d'un dispositif de contrôle conforme à l'invention, et
- la figure 2 est une vue schématique et partielle de la partie électrique d'une canne de prélèvement.

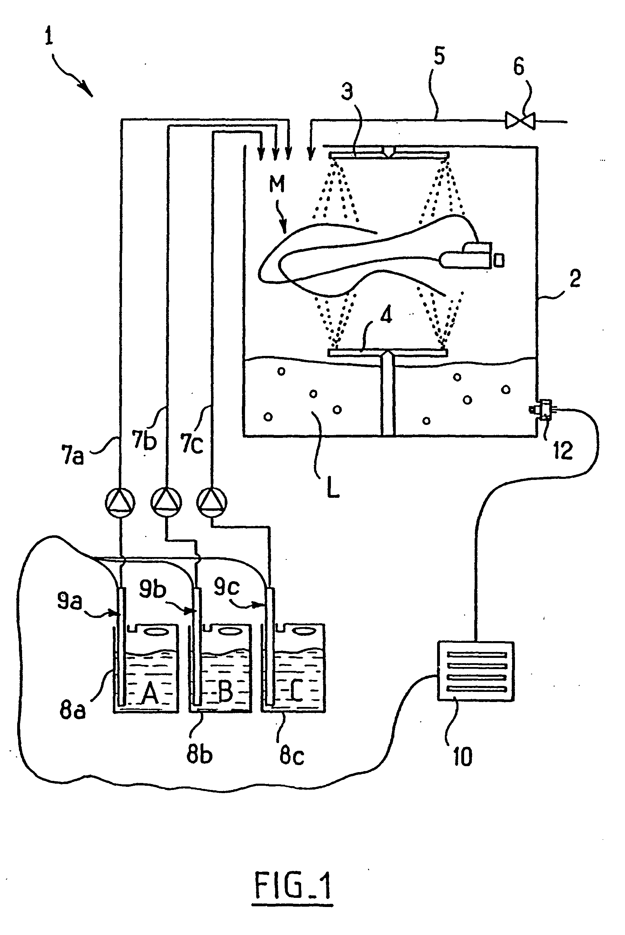

La machine à laver 1 représentée sur la figure 1 comporte une cuve 2 munie de buses d'aspersion supérieures 3 et inférieures 4 permettant de projeter un liquide L présent dans le fond de la cuve 2 sur le matériel à laver M, constitué par exemple d'endoscopes.

La cuve 2 est alimentée en eau par un conduit d'alimentation 5 pourvu d'une électrovanne 6 et en agents de lavage A, de désinfection B et de neutralisation C par des circuits d'alimentation respectifs 7a, 7b et 7c comportant chacun une pompe et reliés à des cannes de prélèvement respectives 9a, 9b, 9c.

Ces dernières sont introduites dans des bidons de stockage 8a, 8b et 8c respectifs contenant des agents de traitement préconisés à l'état concentré.

La machine à laver est équipée d'un dispositif de contrôle comportant des moyens de traitement électroniques 10 programmés pour effectuer un certain nombre d'opérations, comme cela sera décrit plus en détail dans la suite.

Dans l'exemple décrit, le dispositif de contrôle comporte un circuit électronique 15 au niveau de chaque canne de prélèvement et les moyens de traitement 10 sont situés par exemple dans une armoire adjacente à la cuve 2.

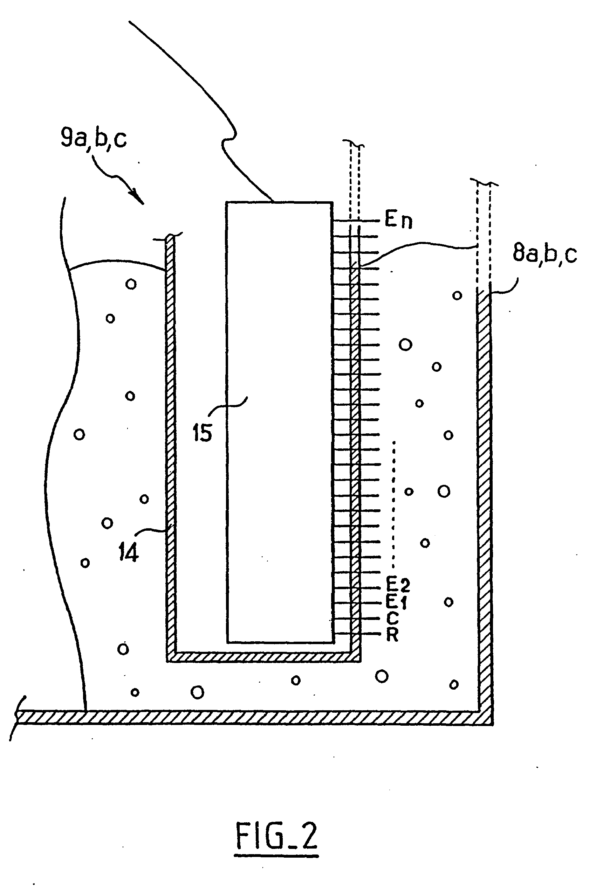

On a illustré schématiquement sur la figure 2 une canne de prélèvement.

Celle-ci est munie d'une pluralité d'électrodes réparties verticalement R, C, E1, E2 ... En, tous les centimètres par exemple, et traversant chacune une paroi isolante 14 pour déboucher à une extrémité dans le bidon de stockage.

Dans l'exemple décrit, chaque électrode est reliée à l'autre extrémité au circuit électronique 15, lequel est relié par un câble électrique aux moyens de traitement 10, mais on ne sort pas du cadre de la présente invention en regroupant physiquement les circuits électroniques 15 et les moyens de traitement 10.

Chaque circuit électronique 15 comporte un générateur de signal, un dispositif de mesure et des moyens tel qu'un microcontrôleur pour exécuter des algorithmes préprogrammés, agir sur le générateur de signal et le dispositif de mesure et transmettre des informations vers les moyens de traitement 10.

Le circuit électronique 15 est aisément réalisé par l'homme du métier en fonction des tâches à accomplir et ne sera pas décrit plus en détail dans un soucis de clarté de l'exposé.

L'électrode inférieure R sert de référence et reçoit le courant émis par les autres électrodes après traversée du liquide présent dans le bidon de stockage.

L'électrode C qui lui est juxtaposée sert à envoyer un courant dans le liquide afin d'en mesurer la résistivité et d'identifier l'agent de traitement dont il s'agit.

Les autres électrodes E1 .... En, qui sont au nombre d'une trentaine dans l'exemple décrit, servent à déterminer le niveau du liquide dans le bidon de stockage.

En injectant successivement dans les différentes électrodes E1 à En un courant à composante continue nulle et en détectant sa réception ou non par l'électrode de référence R, le dispositif de contrôle détermine la hauteur de liquide dans le bidon de stockage.

Dans l'exemple décrit, lorsque l'électrode de référence R ne reçoit pas le courant émis par une électrode Ej, le circuit électronique 15 vérifie que l'électrode de référence R ne reçoit pas de courant non plus lorsque le courant est émis par l'électrode Ej+1 immédiatement supérieure, ce qui permet de réduire les risques d'erreurs concernant la mesure du niveau.

Le suivi du niveau des agents de traitement dans les bidons de stockage par les moyens de traitement 10 permet de s'assurer de la bonne consommation des produits et de déclencher le cas échéant une alarme si la quantité consommée, déduite du résultat des mesures, excède des valeurs de consigne préétablies.

Les mesures de niveau permettent également de suivre l'état du stock afin de prévenir l'utilisateur d'une insuffisance de produit, et les moyens de traitement 10 comportent à cet effet des moyens de communication reliés à une ligne téléphonique par exemple.

Les agents de nettoyage A, de désinfection B et de neutralisation C peuvent comporter chacun un additif inerte vis-à-vis du traitement à effectuer dans la cuve de la machine à laver.

Cet additif est alors présent à une concentration prédéterminée et vise à conférer à l'agent de traitement une résistivité spécifique.

A titre d'exemple d'additif, on peut citer le chlorure de potassium.

On ne sort pas du cadre de la présente invention en utilisant d'autres additifs ou en n'utilisant aucun additif, mais en modifiant la quantité des actifs constituant les agents de traitement.

Les résistivités des différents agents de traitement sont choisies de telle manière que le dispositif de contrôle puisse différencier les agents de traitements lors des mesures de résistivité, comme cela sera précisé dans la suite.

Le dispositif de contrôle est agencé de telle sorte qu'après la mise en place de chaque canne de prélèvement, la résistivité du liquide contenu dans chaque bidon de stockage est mesurée et comparée avec une plage de valeurs prédéterminée préprogrammée, représentative de la présence dans le bidon de stockage concerné de l'agent de traitement préconisé, compte tenu de l'intervalle d'erreur autorisé pour la mesure.

Si la valeur de résistivité mesurée est incluse dans la plage considérée, cela signifie que l'agent de traitement utilisé est bien celui qui est préconisé.

Si par contre la valeur de résistivité mesurée est en dehors de cette plage de valeurs prédéterminée, cela signifie que l'agent de traitement est non conforme et le dispositif de contrôle signale l'anomalie, en déclenchant une alarme par exemple.

Si le dispositif de contrôle reconnaît un autre agent de traitement, il avertit alors l'utilisateur que deux agents de traitement ont été intervertis.

Lorsque l'agent de traitement est considéré comme étant conforme, le dispositif de contrôle autorise son prélèvement par la pompe associée pour l'envoyer dans la cuve 2 de la machine à laver.

A titre d'exemple, on a regroupé dans un tableau en annexe I les résistivités de différents agents de traitement préconisés.

Les résistivités sont mesurées à 20 +/- 1°C au moyen d'un conductimètre de référence CRISON 524 couplé à une cellule en graphite de constante de cellule égale à 1cm.

L'étalonnage de l'appareil s'effectue au moyen d'une solution de KCl de conductivité 1278 µS à 20°C.

Les valeurs minimales et maximales correspondent aux valeurs limites de part et d'autres des valeurs nominales, au delà desquelles le dispositif de contrôle considère que le liquide dont la résistivité est mesurée ne correspond pas à l'agent de traitement préconisé.

Ces valeurs minimales et maximales sont choisies de manière à tenir compte des tolérances de mesure du dispositif de contrôle.

On remarque à l'examen du tableau que les plages de valeurs de résistivité des différents agents de traitement ne se recoupent pas, de sorte que l'on peut, en mesurant la résistivité des agents de traitement présents dans les différents bidons de stockage, avertir l'utilisateur en cas d'interversion des bidons ou en cas d'absence dans un bidon prédéterminé de l'agent de traitement préconisé.

Ainsi, dans le cas d'une machine à laver et à désinfecter des endoscopes par exemple, si la résistivité du liquide présent dans un bidon de stockage est estimée, après analyse, comme incluse dans la plage de valeurs 66 +/- 5 Ohms, le dispositif de contrôle considère que le liquide analysé a une forte probabilité d'être le détergent préconisé, à savoir le DETERGENT LAVE ENDOSCOPE.

L'agent de traitement préconisé pour l'étape de traitement suivante est le DESINFECTANT LAVE ENDOSCOPE.

Si la résistivité du liquide présent dans le bidon de stockage correspondant est estimée, après analyse, comme n'étant pas incluse dans la plage de valeurs de résistivité attendue, à savoir 560 +/- 45 Ohms, cela signifie que le produit analysé n'est pas le produit préconisé.

Si la résistivité est estimée, après analyse, comme étant incluse dans une plage de valeurs prédéterminée correspondant à un autre produit connu, le dispositif de contrôle envoie un message d'erreur signalant par exemple que c'est le NEUTRALISANT INSTRUMENT qui a été utilisé à la place du DESINFECTANT LAVE ENDOSCOPE.

Par ailleurs, les résistivités des agents de traitement sont également choisies de manière à pouvoir évaluer la concentration de chaque agent de traitement présent à l'état dilué dans la cuve 2 et l'identifier.

En d'autres termes, les résistivités des différents agents de traitement sont choisies de telle sorte que, quelle que soit la dureté de l'eau, la mesure de la résistivité d'un agent de traitement à l'état dilué dans la cuve 2 permette l'identification de celui-ci.

Pour illustrer l'influence de la dureté de l'eau sur les mesures de résistivité, on a regroupé en annexe II dans un tableau les résistivités d'un détergent et d'un désinfectant, à l'état dilué, en fonction du degré hydrotimétrique de l'eau utilisée pour la dilution.

Les résistivités nominales de ce détergent et de ce désinfectant à l'état concentré sont choisies de manière à permettre leur différenciation à l'état dilué, quel que soit le degré hydrotimétrique de l'eau et pour des tolérances de mesure données.

Le dispositif de contrôle est agencé de manière à tenir compte de la résistivité de l'eau utilisée pour diluer les agents de traitement dans la cuve, comme cela va être précisé dans la suite.

Plus précisément, les moyens de traitement 10 sont reliés à un capteur 12 placé en partie inférieure de la cuve 2 pour mesurer la résistivité du liquide L présent dans celle-ci. Ce capteur est constitué par une électrode en acier inoxydable, isolée du reste de la cuve, et la résistivité est mesurée entre la masse électrique de la cuve 2 et cette électrode.

Par comparaison du résultat de la mesure effectuée par le capteur 12 avec des plages de valeurs prédéterminées fonction du degré hydrotimétrique de l'eau, le dispositif de contrôle peut déterminer s'il s'agit du détergent ou du désinfectant qui est présent dans la cuve au moment de la mesure.

Ainsi, dans le cas où le degré hydrotimétrique de l'eau est égal à 45°F par exemple, si la résistivité du liquide L est estimée, après analyse, en début de cycle de nettoyage, comme étant différente de 215 +/- 17 Ohms, cela signifie que le détergent préconisé n'est pas présent dans la cuve ou que sa concentration n'est pas celle requise pour effectuer une décontamination efficace.

Dans ce cas, le dispositif de contrôle prévient l'utilisateur d'une anomalie de fonctionnement de la machine à laver.

De la même manière, si la résistivité du liquide L est estimée après analyse, au début du cycle de désinfection, comme n'étant pas incluse dans la plage de valeurs 97 +/- 12 Ohms, cela signifie que la désinfection du matériel ne peut être effectuée dans des conditions optimales et une anomalie est signalée.

Dans l'exemple décrit, le capteur 12 se comporte comme une résistance dont la valeur dépend de la résistivité du liquide L présent dans la cuve 2, cette résistance constituant l'une des branches d'un pont de Wheastone, les autres branches comprenant des moyens électroniques à amplificateurs opérationnels et potentiomètres numériques agencés de manière à simuler des résistances variables idéales.

Dans l'exemple décrit, les mesures de résistivité sont effectuées en envoyant un courant symétrique dans la cuve 2.

La fréquence et l'amplitude de ce courant sont choisies de manière à procurer le confort de lecture recherché.

Le dispositif de contrôle effectue, préalablement à l'envoi des agents de traitement dans la cuve, un calibrage permettant de tenir compte du degré hydrotimétrique de l'eau pour la suite des mesures.

Autrement dit, les mesures de résistivité effectuées en présence des agents de traitement sont des mesures relatives de la résistivité plutôt que des mesures absolues de la résistivité.

Pour effectuer ce calibrage, de l'eau est envoyée dans la cuve 2 par le conduit d'alimentation 5 et les résistances variables précitées sont ajustées par les moyens de traitement 10 de manière à obtenir l'équilibre du pont de Wheastone, cet équilibre étant encore appelé point zéro de l'eau.

Dans l'exemple décrit, l'équilibre du pont de Wheastone est obtenu en jouant sur deux paramètres d'équilibrage numériques.

La sensibilité avec laquelle le courant de déséquilibre du pont de Wheastone est mesuré est avantageusement augmentée une fois le réglage du zéro effectué.

Après dilution de chaque agent de traitement dans la cuve, l'amplitude du courant de déséquilibre du pont de Wheastone est mesurée.

Les moyens de traitement 10 déterminent, à partir de l'amplitude du courant de déséquilibre induite par la présence de l'agent de traitement, par comparaison avec une plage de valeurs prédéterminée, mémorisée ou calculée et dépendant desdits paramètres d'équilibrage, si l'agent de traitement présent dans le liquide L est bien l'agent de traitement préconisé, devant normalement être présent au moment de la mesure.

Dans la négative, le dispositif de contrôle signale l'anomalie et interrompt le traitement.

Bien entendu, l'invention n'est pas limitée à l'exemple de réalisation décrit et s'applique à des machines pouvant laver tout type de matériel, nécessitant des étapes successives de traitement par des agents de traitement différents.

L'invention s'applique ainsi non limitativement à des machines à laver de la verrerie de laboratoire, des biberons, des bassins urinoirs, des cages d'animaux ou des instruments chirurgicaux.

### ANNEXE I

| FAMILLE DE PRODUITS | VALEUR MINIMALE OHMS | VALEUR NOMINALE OHMS | VALEUR MAXIMALE OHMS |
|---|---|---|---|
| NEUTRALISANT ACIDE | 7 | 8 | 9 |
| DETERGENT MOUSSANT | 12.5 | 14 | 15.5 |
| DETERGENT ALCALIN | 16.5 | 18 | 19.5 |
| DETERGENT ACIDE | 22 | 27 | 32 |
| DETERGENT LAVE ENDOSCOPE | 61 | 66 | 71 |
| NEUTRALISANT INSTRUMENT | 123 | 134 | 145 |
| DESINFECTANT LAVE ENDOSCOPE | 515 | 560 | 615 |
| AGENT RINCANT | 900 | 1000 | 1100 |

### ANNEXE II

| DEGRE HYDROTIMETRIQUE DE L'EAU (°F) | DETERGENT OHMS | DESINFECTANT OHMS |
|---|---|---|
| 45 | 215 +/- 17 | 97 +/- 12 |
| 35 | 342 +/- 27 | 174 +/- 20 |
| 27 | 701 +/- 56 | 362 +/- 43 |
| 18 | 2577 +/- 205 | 1450 +/- 174 |
| 0 | 225000 +/- 18000 | 136000 +/- 16000 |

## Revendications

1. Procédé de détection d'une anomalie de fonctionnement d'une machine à laver du matériel médical ou analogue, le fonctionnement de la machine à laver faisant intervenir au moins deux étapes de traitement dudit matériel par des agents de traitement dans une cuve (2) de la machine à laver, telles que des étapes successives de traitement par des agents de nettoyage (A), de désinfection (B) ou de neutralisation (C), ces agents de traitement étant prélevés à l'état concentré par la machine à laver et dilués avec de l'eau en vue de l'utilisation dans ladite cuve, ce procédé étant **caractérisé par le fait :**
- **qu'**il comprend les étapes consistant à :
a) effectuer des mesures de résistivité au moyen d'un ou plusieurs capteurs situés en un ou plusieurs emplacements prédéterminés de la machine à laver et à des moments prédéterminés du fonctionnement de celle-ci,
b) comparer le résultat de la mesure effectuée au moyen d'un capteur (R,C;12) donné à un moment donné avec une plage de valeurs prédéterminée correspondant à la présence au niveau dudit capteur d'un agent de traitement préconisé prédéterminé, choisi parmi plusieurs et correspondant à l'agent de traitement devant normalement être présent au moment de la mesure en cas de fonctionnement correct de la machine à laver,
c) déceler à partir de cette comparaison une éventuelle anomalie de fonctionnement de la machine à laver,
- et par le fait que les agents de traitement préconisés (A,B,C) sont choisis de manière à ce qu'ils présentent des résistivités suffisamment différentes pour permettre leur différenciation lors desdites mesures de résistivité, l'écart de résistivité entre les différents agents de traitement préconisés étant au besoin augmenté par apport d'additifs conducteurs.

2. Procédé selon la revendication 1, **caractérisé par le fait que** préalablement à l'envoi des agents de traitement dans la cuve, on détermine les plages de valeurs précitées en fonction du résultat d'une mesure de résistivité de l'eau utilisée pour diluer les agents de traitement, de manière à tenir compte de l'influence du degré hydrotimétrique de l'eau sur les mesures ultérieures de la résistivité du liquide (L) présent dans la cuve à chaque étape de traitement.

3. Procédé selon la revendication précédente, **caractérisé par le fait que** l'on effectue un calibrage en présence de l'eau utilisée pour la dilution puis on mesure la variation de résistivité induite par la présence d'un agent de traitement dans le liquide contenu dans la cuve et **par le fait que** l'on compare le résultat de cette mesure avec une plage de valeurs prédéterminée dépendant de paramètres ajustés lors du calibrage.

4. Procédé selon la revendication précédente, **caractérisé par le fait que** l'on utilise un capteur de résistivité (12) agencé de manière à constituer l'une des branches d'un pont de Wheastone, ce pont de Wheastone comportant dans ses autres branches au moins deux résistances dont la valeur peut être ajustée en fixant des paramètres d'équilibrage, **par le fait que** l'on ajuste la valeur de ces paramètres de manière à obtenir l'équilibre du pont de Wheastone lorsque le liquide présent dans la cuve est l'eau utilisée pour la dilution des agents de traitement, et **par le fait que** l'on compare l'amplitude du courant de déséquilibre avec des plages de valeurs prédéterminées dépendant desdits paramètres d'équilibrage.

5. Procédé selon l'une quelconque des revendications précédentes, **caractérisé par le fait que** les agents de traitement (A,B,C) sont contenus à l'état concentré dans des bidons de stockage (8a, 8b, 8c) et prélevés par la machine au moyen de cannes de prélèvement (9a, 9b, 9c) introduites dans ces bidons.

6. Procédé selon la revendication précédente **caractérisé par le fait que** les cannes sont munies chacune d'au moins un capteur de résistivité (R,C).

7. Procédé selon l'une des deux revendications précédentes, **caractérisé par le fait que** l'on mesure le niveau du liquide dans chaque bidon de stockage au moyen d'une pluralité d'électrodes.

8. Procédé selon la revendication précédente, **caractérisé par le fait que** les électrodes étant réparties verticalement et successivement alimentées en courant, en cas d'absence de passage de courant dans le liquide pour une électrode située à une hauteur donnée, on vérifie également l'absence de passage de courant dans le liquide à partir de l'électrode immédiatement supérieure avant de valider le résultat de la mesure de niveau.

9. Procédé selon l'une des revendications 7 et 8, **caractérisé par le fait que** l'on détermine à partir du résultat des mesures de niveau une éventuelle anomalie de consommation des agents de traitement et **par le fait que** l'on avertit un site éloigné en cas de baisse du niveau en deçà d'une valeur de consigne.

10. Ensemble pour la mise en oeuvre du procédé tel que défini dans l'une quelconque des revendications 1 à 9, comportant :
i. une pluralité d'agents de traitement (A, B, C) à l'état concentré, ces agents de traitement présentant des écarts de résistivité entre eux suffisamment grands pour permettre leur différentiation au_moyen de mesures de résistivité, et.
ii. une machine à laver du matériel médical ou analogue équipée d'un dispositif de contrôle capable de détecter une anomalie de fonctionnement de la machine, d'un cuve et de moyens (7a, 7b, 7c, 9a, 9b, 9c, 5, 6) pour prélever à l'état concentré, diluer avec de l'eau et introduire les agents de traitement dans la cuve en vue de son utilisation, la machine à laver étant apte à faire intervenir au moins deux étapes de traitement par lesdits agents de traitement,
le dispositif de contrôle comportant au moins un capteur de résistivité (R,C ;12) disposé en un emplacement prédéterminé de la machine à laver, et des moyens de traitement (10) agencés pour (a) comparer le résultat de la mesure effectuée par ledit capteur à un moment donné avec une plage de valeurs prédéterminée correspondant à la présence au niveau dudit capteur d'un agent de traitement préconisé prédéterminé, et correspondant à l'agent de traitement devant normalement être présent au moment de la mesure en cas de fonctionnement correct de la machine à laver, et (b) déceler à partir du résultat de cette comparaison une éventuelle anomalie de fonctionnement de la machine à laver.

11. Ensemble selon la revendication 10, **caractérisé par le fait que** lesdits agents de traitement présentent à l'état concentré une résistivité comprise entre 7 et 1100 Ohms.

12. Ensemble selon la revendication 10 ou 11, **caractérisé par le fait que** l'un au moins desdits agents de traitement comporte un additif conducteur inerte, tel que du chlorure de potassium.

13. Ensemble selon l'une quelconque des revendications 10 à 12, **caractérisé par le fait que** l'un au moins desdits agents de traitement est choisi dans le tableau suivant et présente à l'état concentré une résistivité incluse dans la plage de valeurs correspondante.
| FAMILLE DE PRODUITS | VALEUR MINIMALE OHMS | VALEUR NOMINALE OHMS | VALEUR MAXIMALE OHMS |
|---|---|---|---|
| NEUTRALISANT ACIDE | 7 | 8 | 9 |
| DETERGENT MOUSSANT | 12.5 | 14 | 15.5 |
| DETERGENT ALCALIN | 16.5 | 18 | 19.5 |
| DETERGENT ACIDE | 22 | 27 | 32 |
| DETERGENT LAVE ENDOSCOPE | 61 | 66 | 71 |
| NEUTRALISANT INSTRUMENT | 123 | 134 | 145 |
| DESINFECTANT LAVE ENDOSCOPE | 515 | 560 | 615 |
| AGENT RINCANT | 900 | 1000 | 1100 |

## Claims

1. Method for detecting an anomaly in the working of a washing machine for medical or analogous material, the working of the washing machine causing intervention of at least two stages of processing of said material by treatment agents in a vessel (2) of the washing machine, such as successive stages of treatment by cleaning agents (A), disinfectants (B) or neutralisers (C), these treatment agents being taken in concentrated state by the washing machine and diluted with water with a view to use in said vessel, this method being **characterised:**
- **in that** it comprises the steps consisting of:
a) performing measurements of resistivity by means of one or more sensors located in one or more predetermined locations in the washing machine and at predetermined times in its operation;
b) comparing the result of the measurement performed by a given sensor (R, C; 12) at a given moment with a predetermined range of values corresponding to the presence at said sensor of a predetermined recommended treatment agent selected from several and corresponding to the treatment agent which should normally be present at the time of measurement when the washing machine is working correctly;
c) determining from this comparison any anomaly in function of the washing machine,
- and **in that** the recommended treatment agents (A, B, C) are selected such that they have resistivity values sufficiently different to allow their differentiation during said resistivity measurements, the difference in resistivity between the various recommended treatment agents being if necessary increased by the addition of conductive additives.

2. Method according to claim 1, **characterised in that** before adding the treatment agents to the vessel, the said value ranges are determined as a function of the result of a measurement of resistivity of the water used to dilute the treatment agents so as to take into account the influence of the hydrotimetric degree of the water on the subsequent measurements of resistivity of the liquid (L) present in the vessel at each treatment stage.

3. Method according to the preceding claim, **characterised in that** calibration is performed in the presence of the water used for dilution then the variation in resistivity induced by the presence of a treatment agent in the liquid contained in the vessel is measured and **in that** the result of this measurement is compared with a predetermined value range depending on parameters set during calibration.

4. Method according to the preceding claim, **characterised in that** a resistivity sensor (12) is used which is arranged so as to constitute one of the branches of a Wheatstone bridge, this Wheatstone bridge comprising in its other branches at least two resistors, the value of which can be adjusted by setting the balance parameters, **in that** the value of these parameters is adjusted to obtain the balance of the Wheatstone bridge when the liquid present in the vessel is the water used for dilution of the treatment agents, and **in that** the amplitude of the imbalance current is compared with the predetermined value ranges dependent on said balance parameters.

5. Method according to any of the preceding claims, **characterised in that** the treatment agents (A, B, C) are contained in concentrated state in storage containers (8a, 8b, 8c) and taken by the machine by means of extraction tubes (9a, 9b, 9c) introduced into these containers.

6. Method according to the preceding claim, **characterised in that** these tubes are each fitted with at least one resistivity sensor (R, C).

7. Method according to one of the two preceding claims, **characterised in that** the level of liquid in each storage container is measured by means of a plurality of electrodes.

8. Method according to the preceding claim, **characterised in that,** the electrodes being distributed vertically and successively supplied with current, in the case of absence of the passage of current in the liquid for an electrode situated at a given height, the absence of passage of current in the liquid is also verified from the electrode immediately above before validating the result of the measurement of level.

9. Method according to one of claims 7 and 8, **characterised in that** any anomaly in consumption of treatment agents is determined from the result of level measurements, and **in that** a remote site is notified in the case of a fall in level below a reference value.

10. Apparatus for implementation of the method as defined in any of claims 1 to 9, comprising:
i) a plurality of treatment agents (A, B, C) in concentrated state, these treatment agents showing mutual differences in resistivity which are sufficiently large to allow their differentiation by means of resistivity measurement, and
ii) a washing machine for medical or analogous material, fitted with a control device capable of detecting an anomaly in the working of the machine, a vessel and means (7a, 7b, 7c, 9a, 9b, 9c, 5, 6) for extracting the treatment agents in concentrated state, diluting them with water and introducing them into the vessel with a view to use, the washing machine being able to cause intervention of at least two stages of treatment by said treatment agents, the control device comprising at least one resistivity sensor (R, C; 12) arranged at a predetermined location in the washing machine, and processing means (10) designed to (a) compare the result of the measurement performed by said sensor at a given moment with a predetermined value range corresponding to the presence at said sensor of a predetermined recommended treatment agent, and corresponding to the treatment agent which should normally be present at the time of measurement when the washing machine is working correctly, and (b) determine from the result of this comparison a possible anomaly in function of the washing machine.

11. Apparatus according to claim 10, **characterised in that** said treatment agents in concentrated state have a resistivity between 7 and 1100 Ohms.

12. Apparatus according to claim 10 or 11, **characterised in that** at least one of said treatment agents comprises an inert conductive additive such as potassium chloride.

13. Apparatus according to any of claims 10 to 12, **characterised in that** at least one of said treatment agents is selected from the table below and in concentrated state has a resistivity within in the corresponding value range.
| Family of Products | Minimum Value Ohms | Nominal Value Ohms | Maximum Value Ohms |
|---|---|---|---|
| Neutralising Acid | 7 | 8 | 9 |
| Foaming Detergent | 12.5 | 14 | 15.5 |
| Alkaline Detergent | 16.5 | 18 | 19.5 |
| Acid Detergent | 22 | 27 | 32 |
| Endoscope Washing Detergent | 61 | 66 | 71 |
| Instrument Neutraliser | 123 | 134 | 145 |
| Endoscope Washing Disinfectant | 515 | 560 | 615 |
| Rinsing Agent | 900 | 1000 | 1100 |

## Patentansprüche

1. Verfahren zum Erkennen einer Betriebsanomalie eines Spülgeräts für medizinisches oder ähnliches Material, wobei es zum Betrieb des Spülgeräts gehört, mindestens zwei Behandlungsstufen für das Material durch Reinigungsmittel in einem Gefäß (2) des Spülgeräts herbeizuführen, wie aufeinander folgende Behandlungsstufen durch Reinigungsmittel (A), Desinfektionsmittel (B) oder Neutralisiermittel (C), wobei diese Behandlungsmittel in konzentriertem Zustand durch das Spülgerät entnommen werden und zur Verwendung im Gefäß mit Wasser verdünnt werden, **dadurch gekennzeichnet:**
- **dass** dieses Verfahren Stufen für Folgendes aufweist:
a) Ausführen von Widerstandsmessungen durch einen oder mehrere Sensoren, die sich an einem oder mehreren vorbestimmten Orten der Spülgeräte befinden, zu vorbestimmten Zeitpunkten des Betriebs desselben;
b) Vergleichen des Ergebnisses der durch einen vorgegebenen Sensor (R, C; 12) zu einem vorgegebenen Zeitpunkt ausgeführten Messung mit einem Bereich vorbestimmter Werte, entsprechend dem Auftreten eines empfohlenen, vorbestimmten Behandlungsmittels am Sensor, das unter mehreren ausgewählt wurde und dem vorigen Behandlungsmittel entspricht, das normalerweise zum Zeitpunkt der Messung auftritt, wenn das Spülgerät korrekt arbeitet;
c) Herausfinden einer möglichen Betriebsanomalie des Spülgeräts aufgrund dieses Vergleichs;
- und **dass** die empfohlenen Behandlungsmittel (A, B, C) auf solche Weise ausgewählt werden, dass sie Widerstände zeigen, die ausreichend verschieden sind, um bei den genannten Widerstandsmessungen ihre Unterscheidung zu erlauben, wobei die Widerstandsabstände zwischen den verschiedenen empfohlenen Behandlungsmitteln bei Bedarf durch Zufuhr leitender Zusatzstoffe vergrößert werden.

2. Verfahren nach Anspruch 1, **dadurch gekennzeichnet, dass,** bevor die Behandlungsmittel in das Gefäß geliefert werden, die Bereiche der genannten Werte als Funktion des Ergebnisses einer Widerstandsmessung an Wasser, das dazu verwendet wird, die Behandlungsmittel zu verdünnen, bestimmt werden, um den Einfluss des Wasserhärtegrads des Wassers auf die schließlichen Widerstandsmesswerte der in jeder Behandlungsstufe im Gefäß vorhandenen Flüssigkeit (L) zu berücksichtigen.

3. Verfahren nach dem vorigen Anspruch, **dadurch gekennzeichnet, dass** eine Kalibrierung in Anwesenheit von zur Verdünnung verwendetem Wasser ausgeführt wird und anschließend die Widerstandsänderung gemessen wird, zu der es durch das Vorhandensein eines Behandlungsmittels in der im Gefäß aufgenommenen Flüssigkeit kommt, und dass das Ergebnis dieser Messung mit einem Bereich vorbestimmter Werte, abhängig von bei der Kalibrierung eingestellten Parametern verglichen wird.

4. Verfahren nach dem vorigen Anspruch, **dadurch gekennzeichnet, dass** ein Widerstandssensor (12) verwendet wird, der auf solche Weise angeordnet ist, dass er einen der Zweige einer Wheastone-Brücke bildet, die in ihren anderen Zweigen mindestens zwei Widerstände aufweist, deren Wert dadurch eingestellt werden kann, dass Brückengleichgewichtsparameter fixiert werden; dass der Wert dieser Parameter auf solche Weise eingestellt wird, dass das Gleichgewicht der Wheastone-Brücke dann erhalten wird, wenn die im Gefäß vorhandene Flüssigkeit Wasser ist, wie es zum Verdünnen von Behandlungsmitteln verwendet wird; und dass die Amplitude des Nicht-Gleichgewichtsstroms mit Bereichen vorbestimmter Werte, abhängig von den genannten Brückengleichgewichtsparametern, verglichen wird.

5. Verfahren nach einem der vorstehenden Ansprüche, **dadurch gekennzeichnet, dass** die Behandlungsmittel (A, B, C) in konzentriertem Zustand in Vorratsflaschen (8a, 8b, 8c) enthalten sind und durch das Gerät mittels in diese Flaschen eingeführten Entnahmeröhrchen (9a, 9b, 9c) entnommen werden.

6. Verfahren nach dem vorstehenden Anspruch, **dadurch gekennzeichnet, dass** die Röhrchen jeweils mit mindestens einem Widerstandssensor (C) versehen sind.

7. Verfahren nach einem der zwei vorstehenden Ansprüche, **dadurch gekennzeichnet, dass** der Flüssigkeitspegel in jeder Vorratsflasche mittels mehrerer Elektroden gemessen wird.

8. Verfahren nach dem vorstehenden Anspruch, **dadurch gekennzeichnet, dass** die Elektroden vertikal unterteilt sind und sukzessive mit Strom versorgt werden, wobei beim Fehlen des Fließens eines Stroms in der Flüssigkeit für eine sich auf einer vorgegebenen Höhe befindenden Elektrode auch das Fehlen eines Stromflusses in der Flüssigkeit ausgehend von der unmittelbar darüber befindlichen Elektrode verifiziert wird, bevor das Ergebnis der Pegelmessung gültig erklärt wird.

9. Verfahren nach einem der Ansprüche 7 oder 8, **dadurch gekennzeichnet, dass** ausgehend vom Ergebnis der Pegelmessungen eine mögliche Anomalie des Verbrauchs von Behandlungsmitteln ermittelt wird, und dass eine Warnung an eine entfernte Stelle erfolgt, wenn der Pegel unter einen Sollwert gefallen ist.

10. Anordnung zum Realisieren des Verfahrens nach einem der Ansprüche 1 bis 9, mit:
i. mehreren Behandlungsmitteln (A, B, C) in konzentriertem Zustand, deren wechselseitige Abstände der Widerstände ausreichend groß sind, um ihre Unterscheidung durch Widerstandsmessungen zu ermöglichen; und
ii. einem Spülgerät für medizinisches oder ähnliches Material, wobei dieses Gerät mit einer Steuerungsvorrichtung, die eine Betriebsanomalie des Geräts erkennen kann, einem Gefäß und Einrichtungen (7a, 7b, 7c, 9a, 9b, 9c, 5, 6) zum Entnehmen von Behandlungsmitteln in konzentriertem Zustand zum Verdünnen derselben mit Wasser und zum Einleiten derselben in das Gefäß zur Verwendung versehen ist, wobei das Spülgerät dafür sorgen kann, dass durch diese Behandlungsmittel mindestens zwei Behandlungsstufen herbeigeführt werden;
wobei die Steuerungsvorrichtung mindestens einen Widerstandssensor (R, C; 12), der an einer vorbestimmten Stelle des Spülgeräts angebracht ist, und Behandlungseinrichtungen (10) aufweist, die so ausgebildet sind, dass sie (a) das Ergebnis der durch den Sensor zu einem vorgegebenen Zeitpunkt ausgeführten Messung mit einem Bereich vorbestimmter Werte vergleichen, die dem Vorhandensein eines empfohlenen, vorbestimmten Behandlungsmittels am Sensor entsprechen, und entsprechend dem vorigen Behandlungsmittel, wie es normalerweise zum Zeitpunkt der Messung bei korrektem Betrieb des Spülgeräts auftritt, und (b) Herausfinden einer möglichen Betriebsanomalie des Spülgeräts aufgrund dieses Vergleichs.

11. Anordnung nach Anspruch 10, **dadurch gekennzeichnet, dass** die Behandlungsmittel in konzentriertem Zustand einen Widerstand zwischen 7 und 1100 Ohm zeigen.

12. Anordnung nach Anspruch 10, **dadurch gekennzeichnet, dass** mindestens eines der Behandlungsmittel einen inerten, leitenden Zusatzstoff, wie Kaliumchlorid, enthält.

13. Anordnung nach einem der Ansprüche 10 bis 12, **dadurch gekennzeichnet, dass** mindestens eines der Behandlungsmittel aus der folgenden Tabelle ausgewählt ist und in konzentriertem Zustand einen Widerstand aufweist, der im Bereich der entsprechenden Werte enthalten ist.
| Produktfamilie | Minimalwert Ohm | Nennwert Ohm | Maximalwert Ohm |
|---|---|---|---|
| Neutralisierende Säure | 7 | 8 | 9 |
| Schaumbildendes Detergens | 12,5 | 14 | 15,5 |
| Alkalisches Detergens | 16,5 | 18 | 19,5 |
| Saures Detergens | 22 | 27 | 32 |
| Endoskopwaschdetergens | 61 | 66 | 71 |
| Instrumentneutralisiermittel | 123 | 134 | 145 |
| Endoskopwasch- und Desinfektionsmittel | 515 | 560 | 615 |
| Spülmittel | 900 | 1000 | 1100 |
